Europäisches Patentamt

European Patent Office

Office européen des brevets

(19)

(11) Publication number: **0 043 174**
**B1**

# EUROPEAN PATENT SPECIFICATION

(45) Date of publication of patent specification: 25.01.84

(51) Int. Cl.³: **B 29 F 1/00**

(21) Application number: 81200742.5

(22) Date of filing: 30.06.81

(54) Process for injection-moulding plastics.

(30) Priority: 01.07.80 NL 8003800

(43) Date of publication of application:
06.01.82 Bulletin 82/1

(45) Publication of the grant of the patent:
25.01.84 Bulletin 84/4

(84) Designated Contracting States:
BE DE FR GB IT NL SE

(56) References cited:
FR - A - 2 141 919
US - A - 2 182 389
US - A - 2 191 703
US - A - 2 199 144

(73) Proprietor: STAMICARBON B.V.
Postbus 10
NL-6160 MC Geleen (NL)

(72) Inventor: van Dalen, Hendrik
Elisabethstraat 24
NL-6161 GT Geleen (NL)
Inventor: Schlösser, Willem Johannes
Cobbenhagenstraat 2
NL-6461 VD Kerkrade (NL)

(74) Representative: Hoogstraten, Willem Cornelis
Roeland et al,
OCTROOIBUREAU DSM Postbus 9
NL-6160 MA Geleen (NL)

Courier Press, Leamington Spa, England.

Process for injection-moulding plastics

The invention relates to a process for injection-moulding plastics in which the material to be injection-moulded is introduced into a mould through various gates.

Processes for injection moulding plastics in which the material to be injection-moulded is introduced into the mould through various gates are known. In these processes the injection mould is filled by supplying the plastic melt simultaneously through the various gates, melt fronts extending from each gate and subsequently merging.

It has been found that the strength of an article injection-moulded in such a fashion is less on the weld lines between the melt fronts than at places off these lines. Moreover, the weld lines are visible on the article, rendering the article visually unattractive.

The invention aims to provide a process for injection-moulding plastics in which the material to be injection-moulded is introduced into a mould through various gates while overcoming the aforementioned drawbacks.

The invention is characterized in that, in order to achieve an uninterrupted flow front, the plastic is initially injected through a first gate and that a subsequent gate is utilized for supply only after the flow front of the previously supplied material has passed this subsequent gate.

In this fashion a progressive, uninterrupted flow front is obtained behind which molten material is continuously supplied that, owing to its fairly high temperature, mixes excellently with the molten material already present in the mould.

From U.S. Patent No. 4,041,122 a process is known for the manufacture of thin tubes, in which material is successively let into a mould through various inlets. The problem is of a different nature here, however, The idea of introducing the material into the mould through an aperture only after the aperture has been passed by a flow front cannot therefore be derived from this patent.

The injection of material through a gate which injection has already been started can be continued until the whole charge has been introduced into the injection mould. In this fashion the mould can be rapidly filled.

It is, however, sometimes of advantage to stop injection through a gate as soon as the flow front spreading from this gate has passed the gate(s) immediately following. This is a useful procedure for articles with thicker and thinner sections, for instance. By first moulding the thicker sections and stopping injection here as soon as progression of the flow front can be taken over by other gates, the thicker section can be given a longer cooling time within the total cycle time than when hot plastic melt is continuously supplied by way of the thicker section.

The time schedule for starting supply of plastic through the individual gates for a given article that is to be injection-moulded can be established experimentally or determined by calculation.

Entry of the plastic into the mould is by way of valves fitted in the feed lines and operated by a process computer.

The invention will be elucidated with reference to a device shown in the drawing.

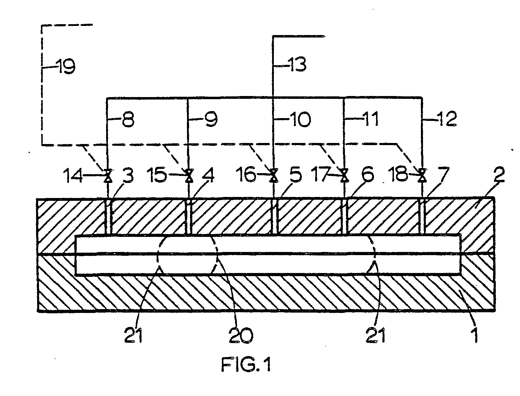

In Figure 1, 1 indicates the lower and 2 the upper half of an injection mould. The injection mould has five gates 3, 4, 5, 6 and 7 with feed lines 8, 9, 10, 11 and 12 respectively, shown diagrammatically, which are supplied form a central feed line 13 connected to an injection-moulding device, not shown. Situated in the feed lines are valves 14, 15, 16, 17 and 18 which may pneumatically, hydraulically or electrically opened and closed in any sequence desired, imposed on the valves by a process computer by way of a control line 19.

The article to be injection-moulded has a high length/thickness ratio, rendering it difficult or impossible to fill the injection mould through one gate (e.g. 5), because the plastic melt will already have cooled off or set too much before it has reached the place farthest removed from gate 5.

The process according to the invention can now entail the plastic melt being introduced through a first gate 3. From here, a flow front then spreads out in all directions. When the flow front has passed gate 4 and is at the position indicated by a dashed line 20, valve 15 is opened, allowing plastic melt to enter the injection mould through gate 4, too. The newly introduced hot melt heats up the melt already present in the mould slightly and mixes with it, while the melt front spreads beyond gate 5, after which valve 16 is also opened and plastic melt allowed into the mould through gate 5. The same happens when the flow front has passed gates 6 and 7. The gates may be closed at various intervals: valve 14 may for instance be closed as soon as valve 15 is opened, which valve is in turn closed as soon as valve 16 is opened and close valve 15 only when valve 17 opens, etc. In this fashion, two gates are always operative. In some cases, additionally, each valve can be left open from the moment it is opened until the whole of the scheduled charge has been introduced into the injection mould.

Instead of allowing the flow front to pass all gates consecutively, from left to right starting from aperture 13, as described above, a method may also be opted for in which the melt front passes gates in more than one direction. Gate 5 may, for instance, first be utilized. Then, the moment the closed melt front has reached the position indicated by the dashed lines 21, and has thus passed gates 4 and 6, valves 15 and 17 are opened and, after the flow front has passed gates 3 and 7, also valves 14 and 18. In this fashion, an injection mould can be filled more rapidly and the injection-moulding cycle shortened. It is clear from the above that it is continually ensured that while the mould is being filled there is one, uninterrupted flow front present in the mould, so that no merging of flow fronts takes place. Weak spots in the finished article are as a consequence avoided, while the appearance of the article is thus improved.

It should be noted that the time required for filling in injection mould according to the invention is ususally longer than with a process in which plastic is supplied simultaneously through all gates. Whether for technical or economic reasons, a compromise must sometimes be made between the disadvantage of this longer filling time and the advantages of the process according to the invention. This can be achieved by utilizing the two first gates, for example, instead of one first gate. In that case, there will thus be one weld line with the known disadvantages, but the quality of the article will still be improved because the total number of weld lines can be reduced. The invention is thus not restricted to utilization of one first injection gate.

The process according to the invention is eminently suitable for manufacturing long articles with fairly thin walls such as plastic bumpers and dashboards for automobiles.

## Claims

1. Process for injection-moulding plastics, in which the material to be injected is introduced into a mould, through various injection gates, characterized in that, in order to obtain an uninterrupted flow front, the plastic is initially injected through a first gate and that a subsequent gate is utilized for supply only after the flow front of the previously supplied material has passed this subsequent gate.

2. Process according to claim 1, characterized in that the injection of material through a gate which has already been utilized is continued until the whole material charge has been introduced into the mould.

3. Process according to claim 1, characterized in that injection through a gate is stopped after the flow front spreading from this gate has passed the immediately following gate(s).

4. Process according to any of claims 1 to 3, characterized in that several first gates are used instead of one.

## Revendications

1. Procédé pour mouler par injection des matières plastiques, dans lequel la matière à injecter est introduite dans un moule par diverses entrées d'injection, caractérisé en ce que, pour que l'on obtienne un front d'écoulement ininterrompu, la matière plastique est injectée initialement par une première entrée, et une entrée suivante est utilisée pour introduction seulement après que le front d'écoulement de la matière introduite précédemment a dépassé cette entrée suivante.

2. Procédé selon la revendication 1, caractérisé en ce que l'injection de matière par une entrée qui a déjà été utilisée est continuée jusqu'à ce que toute la charge de matière ait été introduite dans le moule.

3. Procédé selon la revendication 1, caractérisé en ce que l'injection par une entrée est arrêtée après que le front d'écoulement s'étendant à partir de cette entrée a dépassé l'entrée ou les entrées immédiatement suivantes.

4. Procédé selon l'une quelconque des revendications 1 à 3, caractérisé en ce qu'on utilise plusieurs premières entrées au lieu d'une seule.

## Patentansprüche

1. Verfahren zum Spritzgiessen von Kunststoffen, bei dem das einzuspritzende Material durch mehrere Einspritzöffnungen in ein Werkzeug eingeführt wird, dadurch gekennzeichnet, dass, um eine ununterbrochene Fliessfront zu erzielen, die Kunststoffmasse zunächst durch eine erste Öffnung eingespritzt wird und dass die nächste Öffnung erst dann zum Einspritzen verwendet wird, nachdem die Fliessfront des zunächst eingespritzten Materials diese nächste Öffnung passiert hat.

2. Verfahren nach Anspruch 1, dadurch gekennzeichnet, dass die Einspritzung von Material durch eine bereits verwendete Öffnung fortgesetzt wird, bis die gesamte Charge in das Werkzeug eingeführt worden ist.

3. Verfahren nach Anspruch 1, dadurch gekennzeichnet, dass die Einspritzung durch eine Öffnung beëndet wird, nachdem die von dieser Öffnung sich verteilende Fliessfront die unmittelbar folgende(n) Öffnung(en) passiert hat.

4. Verfahren nach einem der Ansprüche 1 bis 3, dadurch gekennzeichnet, dass mehrere erste Öffnungen anstelle einer Öffnung verwendet werden.

FIG.1